# EUROPÄISCHE PATENTANMELDUNG

(11) **EP 1 045 126 A2**
(43) Veröffentlichungstag der Anmeldung: **18.10.2000**
(21) Anmeldenummer: 00105184.6
(22) Anmeldetag: 11.03.2000
(51) Int. Cl.: F02G 5/00

(54) **Wärmekraftmaschine**

(30) Priorität: 16.04.1999 DE 29906867 U
(71) Anmelder: Spillingwerk GmbH, 20457 Hamburg (DE)
(72) Erfinder: Kiehne, Hartmut, 20457 Hamburg (DE)
(74) Vertreter: Glaeser, Joachim, Dipl.-Ing.

(57) **Zusammenfassung**

Die Erfindung bezieht sich auf eine Wärmekraftmaschine mit mindestens einem hin- und hergehenden Kolben mit Kolbenringen, Kolbenstange und Kolbenstopfbuchse und Kurbeltrieb, in der hochgespannter Dampf in einem Arbeitszyklus den Kolben bewegt, der Zustrom von Dampf vermittels eines Schiebers mit Schieberringen, Schieberstange und Schieberstopfbuchse nach Durchlaufen eines Teils des Arbeitshubs beendet, ein Auslass geöffnet wird und der Kolben unter Verdichtung des Restdampfes bis zur Öffnung des Einlasses in die Ausgangslage zurückkehrt. Für diejenigen Bereiche des Dampfmotors, in denen Bauteile gegeneinander laufen, sind Materialpaarungen gewählt worden, die zwischen sich einen Materialtransfer bewirken und einen Trockenfilm ausbilden. Die Kolbenringe, die Schieberringe und die Dichtringe in den Stopfbuchsen sind mit Materialien mit selbstschmierenden Eigenschaften, Werkstoffen auf der Basis von Kohle, Polytetrafluoräthylen, mit Antimon imprägnierte Kunstkohle ausgewählt worden.

## Beschreibung

Die Erfindung bezieht sich auf eine Wärmekraftmaschine mit mindestens einem hin- und hergehenden Kolben mit Kolbenringen, Kolbenstange und Kolbenstopfbuchse und Kurbel-trieb, in der hochgespannter Dampf in einem Arbeitszyklus den Kolben bewegt, der Zustrom von Dampf vermittels eines Schiebers mit Schieberringen, Schieberstange und Schieberstopfbuchse nach Durchlaufen eines Teils des Arbeitshubs beendet, ein Auslass geöffnet wird und der Kolben unter Verdichtung des Restdampfes bis zur Öffnung des Einlasses in die Ausgangslage zurückkehrt. Unter einer Wärmekraftmaschine sollte umfasst werden ein Dampfmotor, ein Gasexpansionsmotor, ein trocken laufender Gasexpansionsmotor.

In der langen Geschichte der Dampfmaschinen- und Dampfmotorentechnik war es schon immer gewünscht, kein Öl mehr in den Dampf zu spritzen, um Kolben und Schieber zu schmieren, kein Kondensat mehr aufzubereiten und trotzdem von der bestechenden Zuverlässigkeit und Wirtschaftlichkeit dieses bewährten Antriebs zu profitieren.

Dampfmotorentechnik bedeutete von Anfang an, dass Kolben und Schieber sowie Stopfbuchsen mit speziellen temperaturtauglichen Zylinderölen geschmiert werden mussten, um ein Festfressen der gegeneinanderlauf enden Maschinenkomponenten zu vermeiden und die Dichtwirkung von Kolbenringen und Stopfbuchsen zu erhöhen. Jeder, der traditionelle Dampfmaschinen in ihrer offenen Bauweise schon einmal in Aktion gesehen hat, wird sich erinnern, dass der Heizer ständig für die gute Schmierung der beweglichen Teile sorgen musste. In der Schiffahrt, die noch bis in die 50er Jahre hinein Kolbendampfmaschinen zum Antrieb der Schiffsschrauben und Bordgeneratoren nutzte, war für diesen Zweck sogar ein spezieller Beruf entstanden: der Schmierer.

Die Schmierung der Kolben und Schieber in Dampfmotoren, die die schnellaufende gekapselte Weiterentwicklung der traditionellen Dampfmaschinen sind, wurde weiterentwickelt. Direkt von der Kurbenwelle angetriebene Plungerpumpen (kleine Kolbenpumpen) versorgten die verschiedenen Schmierstellen des Motors mit Zylinderöl. Über vor den Dampfeintrittsrohren eingebaute Düsen wurden geringe Mengen des Zylinderöls in den Dampf eingespritzt, die zwischen den Kolben- und Schieberringen und den Laufbuchsen einen Schmierfilm aufbauten, der den Verschleiß dieser Bauteile erheblich minimierte. Der aus dem Motor austretende Abdampf beinhaltete geringe Mengen des Öls, das zum Teil über Abdampfentöler, sogenannte Koaleszenzabscheider, bis auf einen ganz geringen Anteil aus dem Dampf wieder ausgeschieden wurde. Der kondensierte Dampf wurde danach nochmals in Absetzbecken und Aktivkohlefiltern, manchmal auch Koksfiltern gereinigt, so dass das dem Speisewassersystem zufließende Kondensat die zulässigen Höchstgrenzen für den Ölgehalt im Speisewasser von 1 ppm nicht überschritt. Viele, vor allem ältere Anlagen, verfügen bis heute nicht über Abdampfentöler, sondern ausschließlich über einfache Kokskondensatfilter.

Die von manchen Betreibern befürchtete innere Ölverschmutzung von Kesseln, Dampf- und Kondensatrohrleitungen und Wärmetauschern wurde in der Praxis nie als Nachteil festgestellt, weil jeder Kessel ohnehin regelmäßig abgeschlämmt werden muss, um eine zu hohe Chemikalienkonzentration zu vermeiden und damit auch eventuell vorhandene Ölreste entfernt werden. So mancher gemeldete Kesselschaden wurde als Ölschaden dargestellt, bis die wirklichen Ursachen gefunden wurden. Als Nachteil der Zylinderschmierung von Dampfmotoren muss die teure Anlagentechnik für die Ölzu- und abführung sowie der Bedienungsaufwand während des Betriebes angesehen werden.

Dieses war das der Erfindung zugrunde liegende Problem, nämlich nach Lösungen für den ölfreien Betrieb der Kolben und Schieber zu suchen.

Gelöst wird dieses Problem durch eine Wärmekraftmaschine der eingangs genannten Art, die dadurch gekennzeichnet ist, dass für diejenigen Bereiche des Dampfmotors, in denen Bauteile gegeneinander laufen, Materialpaarungen gewählt worden sind, die zwischen sich einen Materialtransfer bewirken und einen Trockenfilm ausbilden, und zwar für die Kolbenringe, die Schieberringe und die Dichtringe in den Stopfbuchsen, Materialien mit selbstschmierenden Eigenschaften, Werkstoffen auf der Basis von Kohle, Polytetrafluoräthylen, mit Antimon imprägnierte Kunstkohle ausgewählt worden sind.

Eine weitere Ausführungsform ist dadurch gekennzeichnet, dass eine Dampfmaschine der eingangs genannten Art dadurch gekennzeichnet ist, dass für diejenigen Bereiche des Dampfmotors, in denen Bauteile gegeneinander laufen, Materialpaarungen gewählt worden sind, die zwischen sich einen Materialtransfer bewirken und einen Trockenfilm ausbilden, und zwar die Teile mit den Gegenlauftlächen der Kolben, Schieber, Kolbenstange und Schieberstangen mit Hartbeschichtungen, vorzugsweise Ceresit-Hartbeschichtungen, ausgebildet sind. Die moderne Werkstofftechnik macht es schließlich möglich, Materialpaarungen zu entwickeln, die einen Betrieb ohne Flüssigschmierung mit geringen Verschleißraten ermöglichen. So wurden Materialpaarungen gefunden, die beim Aneinanderlaufen einen Materialtransfer bilden und damit einen Trockenfilm erzeugen. Das Öl wird dadurch als Schmiermittel gegen eine Trockenschmiemung ersetzt. Damit können alle Schmierungseinrichtungen am Motor selbst sowie alle Anlagenteile zubReinigung von Dampf und Kondensat entfallen, und der Betrieb braucht für die ausreichende Schmierung nicht mehr Sorge zu tragen.

Der ölfreie Betrieb der Kolben, Schieber und Stopfbuchsen wird dadurch ermöglicht, dass die Kolben- und Schieberringe bzw. die Dichtringe in den Stopfbuchsen aus einem Material hergestellt werden, welches selbstschmierende Eigenschaften besitzt. Dieses sind Werkstoffe auf Basis Kohle oder PTFE. Eine andere Variante ist, dass die Gegenlaufflächen (Kolben- und Schieberlaufbuchsen, Kolben- und Schieberstangen) mit einer Ceresit-Hartbeschichtung versehen werden und dadurch konventionelle Kolben- und Stopfbuchsringe aus Stahl bzw. Grauguss verwendet werden können. Eingesetzt wurden Dichtringe aus mit Antimon imprägnierter Kunstkohle.

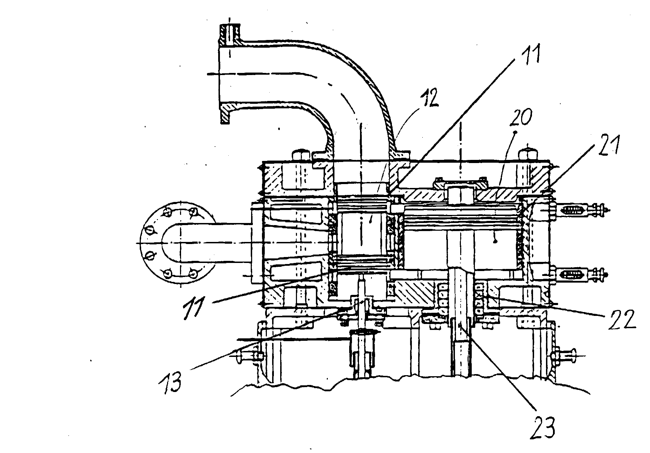

Die Erfindung wird nachstehend anhand der Zeichnung beispielsweise erläutert.

Die einzige Figur der Zeichnung zeigt eine Teilschnittansicht eines Dampfmotors gemäß der Erfindung.

Der Dampfmotor gemäß der Erfindung ist in der Figur lediglich zum Teil wiedergegeben. Zu erkennen sind im linken oberen Teil der Darstellung der Dampf ein- und der Dampfauslass und insbesondere der Kolben 20 und der Schieber 12. Die Funktionsweisen dieser Teile sind hinlänglich bekannt, im Zusammenhang mit der vorliegenden Erfindung kommt es auf folgendes an:

Der Schieber 12 ist mit Schieberringen 11 ausgebildet, die in einer Schieberlaufbuchse hin- und hergehen. Der Schieber 12 wird über eine Schieberstange 13 angesteuert, die in einer Stopfbuchse hin- und hergeht.
Der Kolben 20 ist mit Kolbenringen 21 ausgebildet, die einer Kolbenlaufbuchse hin- und hergehen. Am Kolben 20 ist eine Kolbenstange 23 befestigt, die in einer Kolbenstopfbuchse 22 gehaltert ist.

Die jeweils aufeinander einwirkenden Flächen der einzelnen Bauteile des Dampfmotors sind also:
Die Kolbenringe 21 und die Kolbenlaufbuchse
Die Kolbenstange 23 und die Kolbenstopfbuchse 22
die Schieberringe 11 mit der Schieberlaufbuchse
Die Schieberstange 13 mit der Schieberstopfbuchse.

Es sind nun diese jeweils Paare bildenden Teile, die in Übereinstimmung mit den Aussagen der Ansprüche so ausgebildet werden können, dass der Dampfmotor keine Schmierung braucht.

Für die vorliegende Erfindung kommen folgende Trockenschmierungssysteme in Frage:

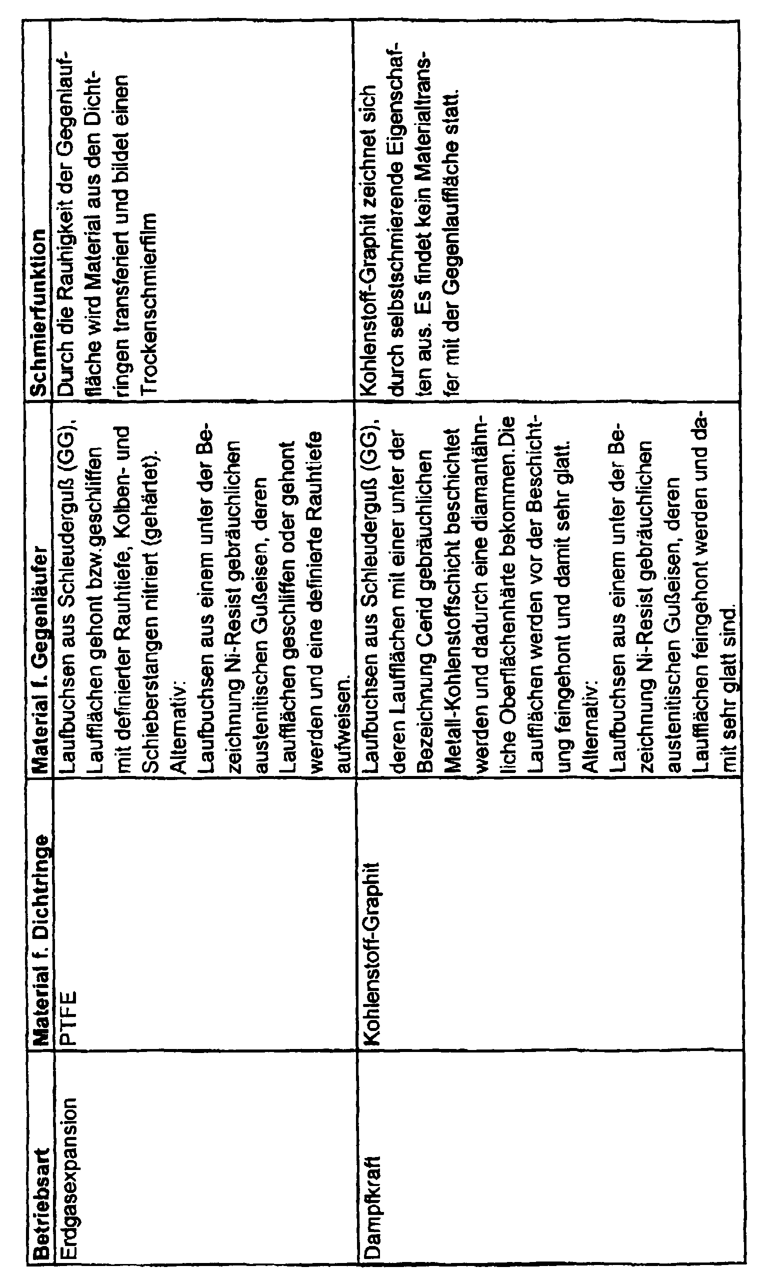

## Patentansprüche

1. Wärmekraftmaschine mit mindestens einem hin- und hergehenden Kolben mit Kolbenringen, Kolbenstange und Kolbenstopfbuchse und Kurbeitrieb, in der hochgespannter Dampf in einem Arbeitszyklus den Kolben bewegt, der Zustrom von Dampf vermittels eines Schiebers mit Schieberringen, Schieberstange und Schieberstopfbuchse nach Durchlaufen eines Teils des Arbeitshubs beendet, ein Auslass geöffnet wird und der Kolben unter Verdichtung des Restdampfes bis zur Öffnung des Einlasses in die Ausgangslage zurückkehrt, dadurch gekennzeichnet, dass für diejenigen Bereiche des Dampfmotors, in denen Bauteile gegeneinander laufen, Materialpaarungen gewählt worden sind, die zwischen sich einen Materialtransfer bewirken und einen Trockenfilm ausbilden, und zwar für die Kolbenringe, die Schieberringe und die Dichtringe in den Stopfbuchsen, Materialien mit selbstschmierenden Eigenschaften, Werkstoffen auf der Basis von Kohle, Polytetrafluoräthylen, mit Antimon imprägnierte Kunstkohle ausgewählt worden sind.

2. Wärmekraftmaschine mit mindestens einem hin- und hergehenden Kolben mit Kolbenringen, Kolbenstange und Kolbenstopfbuchse und Kurbeltrieb, in der hochgespannter Dampf in einem Arbeitszyklus den Kolben bewegt, der Zustrom von Dampf vermittels eines Schiebers mit Schieberringen, Schieberstange und Schieberstopfbuchse nach Durchlaufen eines Teils des Arbeitshubs beendet, ein Auslass geöffnet wird und der Kolben unter Verdichtung des Restdampf es bis zur Öffnung des Einlasses in die Ausgangslage zurückkehrt, dadurch gekennzeichnet, dass für diejenigen Bereiche des Dampfmotors, in denen Bauteile gegeneinander laufen, Materialpaarungen gewählt worden sind, die zwischen sich einen Materialtransfer bewirken und einen Trockenfilm ausbilden, und zwar die Teile mit den Gegenlaufflächen der Kolben, Schieber, Kolbenstange und Schieberstangen mit Hartbeschichtungen, vorzugsweise Ceresit-Hartbeschichtungen, ausgebildet sind.
